# EUROPEAN PATENT APPLICATION

(11) **EP 4 431 758 A1**
(43) Date of publication of application: **18.09.2024**
(21) Application number: 22892392.6
(22) Date of filing: 05.09.2022
(51) Int. Cl.: F16C 33/58, F16C 19/46, F16C 33/56

(54) **ROLLER BEARING**

(30) Priority: 11.11.2021 JP 2021184102
(71) Applicant: Nippon Thompson Co., Ltd., Tokyo 108-8586 (JP)
(72) Inventor: MOTOYAMA, Mao, Mino-shi, Gifu 501-3763 (JP); TAKAYA, Yusuke, Mino-shi, Gifu 501-3763 (JP)
(74) Representative: Page White Farrer
(86) International application number: PCT/JP2022/033232
(87) International publication number: WO 2023/084889

(57) **Abstract**

A rolling bearing includes a shell type outer ring having a raceway surface on an inside diameter side thereof, a plurality of rollers rolling on the raceway surface, and a retainer arranged on the inside diameter side of the shell type outer ring and retaining the plurality of rollers. The shell type outer ring has, in a first region including a first end located on one side in an axial direction thereof, a flange formed to extend on the inside diameter side. The shell type outer ring has, in a second region including a second end located on the other side in the axial direction thereof, a protrusion formed to protrude on the inside diameter side. A plurality of such protrusions are provided spaced apart from each other in a circumferential direction. When a protruding amount of the protrusion from the raceway surface is a length L₁ and a wall thickness of the shell type outer ring at the raceway surface is a length T₁, the length L₁ is not more than the length T₁.

## Description

### Technical Field

The present disclosure relates to a rolling bearing. The present application claims priority based on Japanese Patent Application No. 2021-184102 filed on November 11, 2021, the entire contents of which are incorporated herein by reference.

### Background Art

Needle roller bearings including needle rollers as the rolling elements are known (see, for example, Patent Literature 1, Patent Literature 2, and Patent Literature 3). Patent Literature 1 discloses a shell type needle bearing which has a bearing cross-sectional height of 1.0 mm to 2.0 mm, a retainer plate thickness of 0.3 mm to 1.2 mm, and a clearance of 0.15 mm to 0.25 mm between the outer circumferential surface of the flange and the raceway surface in a state where the shell is press-fitted. Patent Literature 2 discloses a shell type needle roller bearing which includes a shell type outer ring, a plurality of needle rollers, and a retainer, wherein the number of the needle rollers, the roller diameter of the needle rollers, and the diameter of a circle connecting the centers of rotation of the needle rollers arranged on the raceway surface have a predetermined relationship. In the needle roller bearing disclosed in Patent Literature 3, in order to restrict the movement in the axial direction of the retainer retaining the needle rollers, both ends of the shell type outer ring are bent inward, thereby restricting the axial movement of the retainer.

### Citation List

### Patent Literature

Patent Literature 1: Japanese Patent No. 5476593
Patent Literature 2: Japanese Patent No. 5081571
Patent Literature 3: Japanese Patent Application Laid-Open No. 2005-172037

### Summary of Invention

### Technical Problem

In recent years, there has been a demand for low friction, i.e., reduced friction, during the use of a bearing, and there has been a trend toward replacing sliding bearings with rolling bearings. Further, in order to make the radial size as compact as possible from the standpoint of further reduced friction, it is required to further reduce the cross section of the bearing, i.e., to make the cross-sectional area as small as possible, compared to the bearings disclosed in Patent Literature 1, Patent Literature 2, and Patent Literature 3. A rolling bearing is produced by assembling members such as rollers, a retainer, and an outer ring having a raceway surface. Good productivity is also required for the rolling bearing. Therefore, one of the objects is to provide a rolling bearing that ensures good productivity and is capable of achieving reduced friction.

### Solution to Problem

A rolling bearing according to the present disclosure includes: a shell type outer ring having a raceway surface on an inside diameter side thereof; a plurality of rollers rolling on the raceway surface; and a retainer arranged on the inside diameter side of the shell type outer ring and retaining the plurality of rollers. The shell type outer ring has, in a first region including a first end located on one side in an axial direction thereof, a flange formed to extend on the inside diameter side. The shell type outer ring has, in a second region including a second end located on another side in the axial direction thereof, a protrusion formed to protrude on the inside diameter side. A plurality of the protrusions are provided spaced apart from each other in a circumferential direction. When a protruding amount of the protrusion from the raceway surface is a length L₁ and a wall thickness of the shell type outer ring at the raceway surface is a length T₁, the length L₁ is not more than the length T₁.

### Advantageous Effects of Invention

The rolling bearing described above ensures good productivity and achieves reduced friction.

### Brief Description of Drawings

FIG. 1 is a schematic perspective view showing the structure of a rolling bearing in Embodiment 1.
FIG. 2 is an exploded perspective view of the rolling bearing shown in FIG. 1.
FIG. 3 is a schematic cross-sectional view of a portion of the rolling bearing shown in FIG. 1.
FIG. 4 is a schematic cross-sectional view of a portion of a shell type outer ring included in the rolling bearing shown in FIG. 1.
FIG. 5 is a schematic side view of a portion of the shell type outer ring when a protrusion is formed, illustrating the state before the formation of the protrusion.
FIG. 6 is a schematic perspective view of a portion of the shell type outer ring when a protrusion is formed, illustrating the state before the formation of the protrusion.
FIG. 7 is a schematic side view of a portion of the shell type outer ring when a protrusion is formed, illustrating the state after the formation of the protrusion.
FIG. 8 is a schematic perspective view of a portion of the shell type outer ring when a protrusion is formed, illustrating the state after the formation of the protrusion.
FIG. 9 is a schematic perspective view showing the structure of a rolling bearing in Embodiment 2.
FIG. 10 is an exploded perspective view of the rolling bearing shown in FIG. 9.
FIG. 11 is a schematic cross-sectional view of a portion of the rolling bearing shown in FIG. 9.
FIG. 12 is a schematic cross-sectional view of a portion of a shell type outer ring included in the rolling bearing shown in FIG. 9.
FIG. 13 is a schematic side view of a portion of the shell type outer ring when a protrusion is formed, illustrating the state before the formation of the protrusion.
FIG. 14 is a schematic side view of a portion of the shell type outer ring when a protrusion is formed, illustrating the state after the formation of the protrusion.

### Description of Embodiments

### [Outline of Embodiments]

A rolling bearing of the present disclosure includes: a shell type outer ring having a raceway surface on an inside diameter side thereof; a plurality of rollers rolling on the raceway surface; and a retainer arranged on the inside diameter side of the shell type outer ring and retaining the plurality of rollers. The shell type outer ring has, in a first region including a first end located on one side in an axial direction thereof, a flange formed to extend on the inside diameter side. The shell type outer ring has, in a second region including a second end located on another side in the axial direction thereof, a protrusion formed to protrude on the inside diameter side. A plurality of the protrusions are provided spaced apart from each other in a circumferential direction. When a protruding amount of the protrusion from the raceway surface is a length L₁ and a wall thickness of the shell type outer ring at the raceway surface is a length T₁, the length L₁ is not more than the length T₁.

In the places where sliding bearings including no rolling elements have been conventionally used, the bearings are being replaced by rolling bearings including rolling elements from the standpoint of reduced friction. In order to meet the expectation of even more reduced friction, it is required to reduce the cross section of the bearing, i.e., to make the cross-sectional area as small as possible. Here, for the rolling bearing, for the purpose of improving the productivity, a shell type outer ring, which is produced by drawing a steel plate and subjecting it to heat treatment, may be used as the outer ring.

Under these circumstances, the present inventors first considered as follows. In order to reduce the cross section of a rolling bearing, it is required to reduce the wall thickness of the shell type outer ring. However, at the time of heat treatment, for example in the case of performing carbonitriding treatment, carburizing treatment, or the like, it is necessary to form a minimum-required carbonitrided layer or carburized layer, so there is a limit to the reduction of the wall thickness while ensuring the strength as a bearing. In other words, assuming that the thickness on one side in the thickness direction should be at least 0.1 mm in consideration of securing a layer such as a carbonitrided layer necessary for maintaining the strength, the inventors considered that it would be desirable to secure the wall thickness of 0.3 mm for the shell type outer ring.

In a rolling bearing including such a shell type outer ring, a retainer for retaining the rollers is provided. The retainer is arranged on the inside diameter side of the shell type outer ring. The rolling bearing is required to include a mechanism that restricts the movement of the retainer in the axial direction to prevent misalignment and falling off of the retainer.

The rolling bearing of the present disclosure includes the shell type outer ring. In the first region of the shell type outer ring including the first end located on one side in the axial direction thereof, the flange is formed to extend on the inside diameter side. In the shell type outer ring, the flange is formed by punching and cutting off the bottom portion after the drawing process. In this case, the flange is formed, not by bending the first end located on the one side of the shell type outer ring, but by cutting off the bottom portion of the cup-shaped member. This allows the cross section to be reduced.

On the other hand, in the second region including the second end located on the other side in the axial direction where drawing is not performed, it is also necessary to provide a mechanism that prevents falling off of the retainer in the axial direction. In this case, if a mechanism that prevents the retainer from falling off is to be provided by bending the axial end of the shell type outer ring as in Patent Literature 3, the wall thickness at the bent portion will become large, hindering reduction of the cross section.

In the rolling bearing of the present disclosure, in the second region of the shell type outer ring including the second end located on the other side in the axial direction thereof, the protrusion is formed to protrude on the inside diameter side. A plurality of such protrusions are provided spaced apart from each other in the circumferential direction. When the protruding amount of the protrusion from the raceway surface is a length L₁, the length L₁ is not more than the length T₁. Such a protrusion can be easily formed by pressing the shell type outer ring with a die from the outside diameter side before the heat treatment, or by scraping and raising the inside diameter surface of the shell type outer ring. As the protrusion is formed in the above-described manner, instead of being formed by bending or the like, it can be made short just enough to restrict the movement of the retainer. In other words, the protruding amount of the protrusion to the inside diameter side can be easily adjusted, and the length L₁ can be easily made to be not more than the length T₁. According to such protrusions, it is possible to prevent misalignment and falling off of the retainer in the axial direction, while achieving a reduced cross section.

From the above, the rolling bearing described above ensures good productivity and achieves reduced friction.

In the above rolling bearing, when a length in a radial direction of the flange from the raceway surface is a length L₂, the length L₂ may be not more than the length T₁. This allows the cross section to be further reduced. Here, as described above, the flange is formed in the shell type outer ring by punching and cutting off the bottom portion after the drawing process. This bottom portion to be cut off can be made as large as possible to make the flange short just enough to restrict the movement of the retainer. In other words, the protruding amount of the flange to the inside diameter side can be easily adjusted, and the length L₂ can be easily made to be not more than the length T₁.

In the above rolling bearing, the shell type outer ring may have an indentation formed on an outer ring outside diameter surface thereof in a region corresponding to the protrusion in a radial direction. With this, the indentation can be utilized, for example, when a seal member used for sealing the rolling bearing is to be attached to the rolling bearing. Specifically, for example in the case of attaching the seal member on the second end side in the axial direction of the shell type outer ring, this indentation can be engaged with a protruding portion provided on the inside diameter side of the annular seal member in a portion corresponding to the indentation, to thereby achieve stable retention of the seal member in the rolling bearing. It should be noted that such an indentation can be easily formed when forming the protrusion by pressing the shell type outer ring from the outside diameter side, as will be described later.

In the above rolling bearing, the shell type outer ring may include a thin-walled portion arranged between the protrusion and the second end in an axial direction, the thin-walled portion being formed so as to reduce a thickness of the shell type outer ring. With this, the thin-walled portion can be utilized, for example, when a seal member used for sealing the rolling bearing is to be attached to the rolling bearing. Specifically, for example in the case of attaching the seal member on the second end side in the axial direction of the shell type outer ring, this thin-walled portion can be engaged with a protruding portion provided on the outside diameter side of the annular seal member in a portion corresponding to the thin-walled portion, to thereby achieve stable retention of the seal member in the rolling bearing. It should be noted that such a thin-walled portion can be easily formed when forming the protrusion by scraping the inside diameter side of the shell type outer ring, as will be described later.

In the above rolling bearing, the protrusion may have a rectangular outer shape as viewed in a radial direction. With this, even if the protrusion comes into contact with the retainer in the axial direction, the risk of the end surface of the retainer being scraped or dented by the protrusion can be reduced. This ensures stable use for a longer period of time.

The above rolling bearing may further include a washer having an annular shape following an outer ring inside diameter surface of the shell type outer ring, the washer being arranged between the retainer and the protrusions in the axial direction. With this, the washer can avoid direct contact between the end surface in the axial direction of the retainer and the protrusions. Therefore, the retainer can be used stably for a long period of time, resulting in an extended life of the rolling bearing.

In the above rolling bearing, the retainer may be a split retainer made of a resin and divided in a circumferential direction. With this, in the case of arranging the retainer on the inside diameter side of the shell type outer ring, the split retainer can be elastically deformed to facilitate assembling the retainer on the inside diameter side of the shell type outer ring. Thus, the productivity can be improved.

In the above rolling bearing, the rollers may be needle rollers. This facilitates achieving sufficient load bearing capacity while suppressing the cross-sectional height of the rolling bearing.

### [Specific Embodiments]

Specific embodiments of the rolling bearing of the present disclosure will be described below with reference to the drawings. In the drawings referenced below, the same or corresponding portions are denoted by the same reference numerals and the description thereof will not be repeated.

### (Embodiment 1)

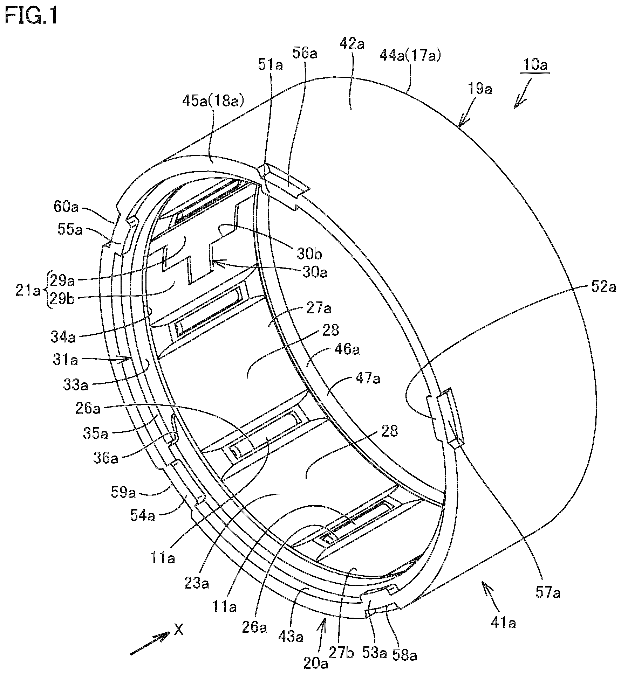

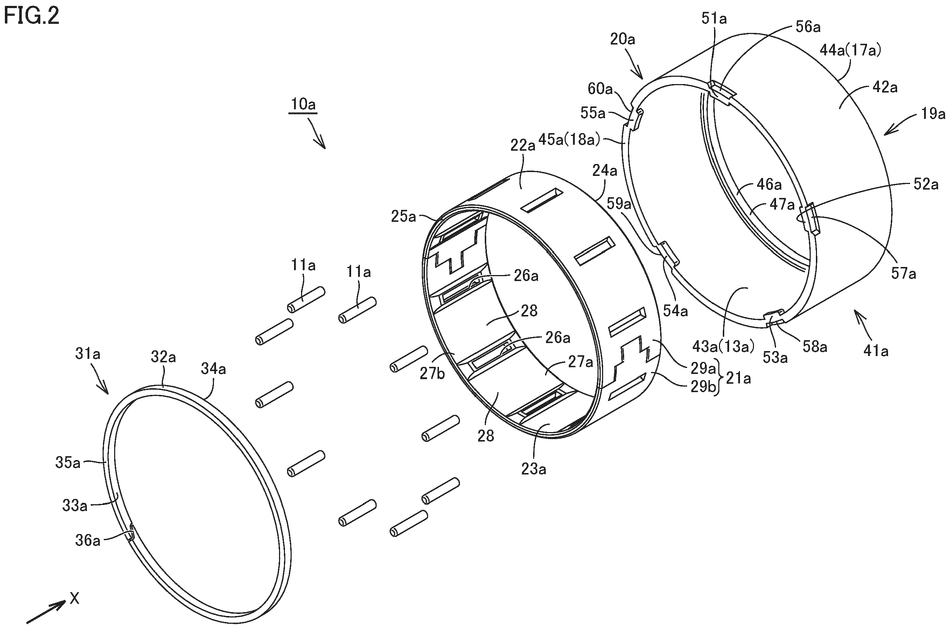

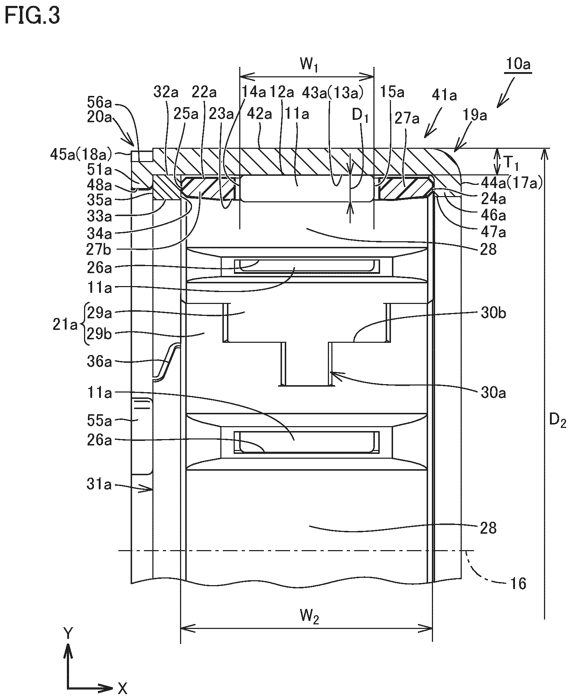

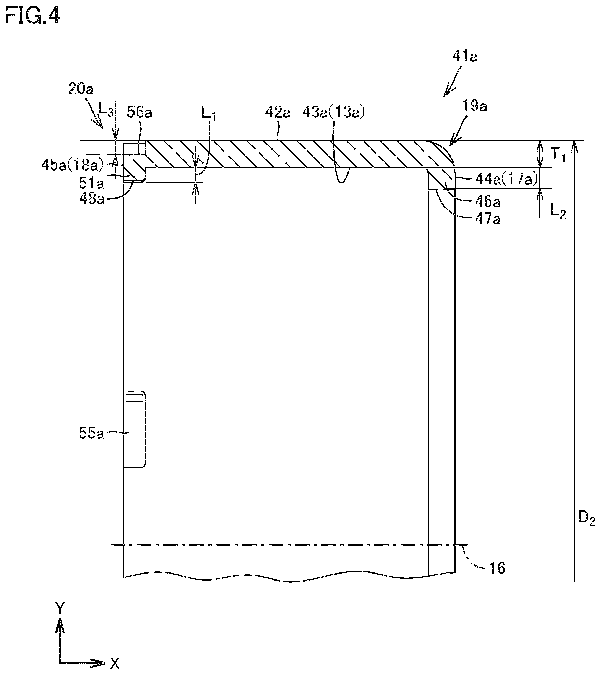

A rolling bearing according to Embodiment 1 of the present disclosure will be described. FIG. 1 is a schematic perspective view showing the structure of the rolling bearing in Embodiment 1. FIG. 2 is an exploded perspective view of the rolling bearing shown in FIG. 1. FIG. 3 is a schematic cross-sectional view of a portion of the rolling bearing shown in FIG. 1. FIG. 4 is a schematic cross-sectional view of a portion of a shell type outer ring included in the rolling bearing shown in FIG. 1. In FIGS. 3 and 4, a rotational center axis 16 of the rolling bearing is indicated by a long dashed short dashed line. In other words, FIGS. 3 and 4 are cross-sectional views when cut in a cross section including the rotational center axis of the rolling bearing. In FIG. 1 and the following figures, the direction indicated by the arrow X is an axial direction, and the direction indicated by the arrow Y is a radial direction.

Referring to FIGS. 1 to 4, the rolling bearing 10a in Embodiment 1 includes a plurality of rollers 11a as the rolling elements, a retainer 21a retaining the rollers 11a, a washer 31a, and a shell type outer ring 41a including a raceway surface 13a on its inside diameter side. In the use of the rolling bearing 10a, an unshown shaft having a raceway surface on its outer circumferential surface for the rollers 11a to roll thereon is disposed on the inside diameter side of the retainer 21a. In the present embodiment, the rollers 11a are needle rollers. This facilitates achieving sufficient load bearing capacity while suppressing the cross-sectional height of the rolling bearing 10a. The rolling bearing 10a in Embodiment 1 is a shell type needle roller bearing. The rolling bearing 10a includes ten rollers 11a. Each roller 11a rolls on the raceway surface 13a. As the number of the rollers 11a, a number that has the following relationship in terms of the roller pitch circle diameter (PCD) is suitably adopted. That is, as the number of the rollers 11a, a number that is (roller PCD×π/length D₁)×0.1 or more and (roller PCD×π/length D₁)×0.4 or less is suitably used. Here, the roller PCD is calculated using a formula of: length D₂-(length T₁×2)-length D₁. The length D₁ is a diameter of the rollers 11a, as will be described later. The length D₂ is an outside diameter of the shell type outer ring 41a, as will be described later. The length T₁ is a wall thickness of the shell type outer ring 41a, as will be described later. In other words, the number of the rollers 11a preferably has the relationship of: (roller PCD×π/length D₁)×0.1 ≤ the number of the rollers 11a ≤ (roller PCD×π/length D₁)×0.4. Setting the number of the rollers 11a to be (roller PCD×π/length D₁)×0.1 or more can avoid the reduction of load capacity due to the small number of rollers 11a. Setting the number of the rollers 11a to be (roller PCD×π/length D₁)×0.4 or less can reduce the risk that the circumferential gaps between the rollers 11a become small due to the large number of rollers 11a, which would reduce the strength of pillar portions 28 of the retainer 21a.

A roller 11a has a solid cylindrical shape. The roller 11a includes a rolling surface 12a, rolling on the raceway surface 13a included in the shell type outer ring 41a and on the raceway surface included in the unshown shaft, a roller first end surface 14a located on one side in the axial direction, and a roller second end surface 15a located on the other side in the axial direction. The roller first end surface 14a and the roller second end surface 15a are both flat and parallel to a plane perpendicular to the rotational axis direction (X direction). It should be noted that the roller first end surface 14a and the roller second end surface 15a may not be flat. Specifically, the end surfaces may be configured to include curved surfaces, such as hemispherical surfaces, for example. The diameter of the rollers 11a, i.e., the roller diameter of the rollers 11a, is indicated by the length D₁ in FIG. 3. In the present embodiment, the diameter of a roller 11a means the largest diameter in the axial direction. Here, the length D₁ is not more than 2 mm. That is, length D₁ ≤ 2 mm. With such a diameter of the rollers 11a, a reduced cross section can be reliably achieved.

It should be noted that the length D₁ is preferably 0.2 mm or more. This allows a sufficient strength to be obtained as a bearing. In the case where the length D₁ is 0.2 mm, the length T₁ of 0.3 mm, for example, can be adopted to satisfy the above relationship of 0.5 ≤ length D₁/length T₁ < 1.5. As a specific value for the length D₁, 0.5 mm, for example, is selected. The length of the roller 11a from the roller first end surface 14a to the roller second end surface 15a is indicated by a length W₁. As the length W₁, a length that has a relationship of 3×length D₁ ≤ W₁ ≤ 9×length D₁ is suitably used. In the case where 0.5 mm is selected as the value of the length D₁, a value having the relationship of 1.5 mm ≤ length W₁ ≤ 4.5 mm is suitably used as the length W₁. In the present embodiment, 2.5 mm, for example, is selected as the value of the length W₁. The roller 11a is made of a steel such as, for example, a bearing steel. The roller 11a may be quench-hardened.

The retainer 21a has an annular shape. The retainer 21a is arranged concentrically with the aforementioned unshown shaft and the shell type outer ring 41a in a space sandwiched between the shaft and the shell type outer ring 41a. The retainer 21a includes a retainer outside diameter surface 22a located on the outside diameter side, a retainer inside diameter surface 23a located on the inside diameter side, a retainer first end surface 24a located on the one side in the axial direction, and a retainer second end surface 25a located on the other side in the axial direction. The length of the retainer 21a in the axial direction, i.e., the axial length from the retainer first end surface 24a to the retainer second end surface 25a, is indicated by a length W₂ in FIG. 3. As the length W₂, a length that has a relationship of length W₁+1 mm ≤ W₂ ≤ 2×length W₁+1 mm is suitably used. In the case where 2.5 mm is selected as the value of the length W₁, a value having the relationship of 3.5 mm ≤ length W₁ ≤ 6.0 mm is suitably used as the length W₂. In the present embodiment, the length W₂ is 4.66 mm.

The retainer 21a includes a pair of annular portions 27a and 27b provided apart from each other in the axial direction, and a plurality of pillar portions 28 connecting the pair of annular portions 27a and 27b so as to form pockets 26a. In other words, the retainer 21a has a plurality of pockets 26a provided at equal intervals in the circumferential direction to penetrate in the radial direction. Each of the pockets 26a has a roller 11a arranged therein. The plurality of rollers 11a retained by the retainer 21a are arranged on an annular raceway following the raceway surface 13a and the raceway surface of the unshown shaft. It should be noted that for the thickness in the radial direction of the pillar portions 28, or in this case, for the radial length of the retainer 21a, a length that is not less than length D₁×0.5 mm and not more than length D₁×0.9 mm is suitably used.

In the present embodiment, the retainer 21a is made of a resin. The retainer 21a is composed of two circumferentially split retaining portions 29a and 29b. In other words, the retainer 21a is a split retainer made of a resin and divided in the circumferential direction. With this, in the case of arranging the retainer 21a on the inside diameter side of the shell type outer ring 41a, the split retainer, i.e., the split retaining portions 29a and 29b, can be elastically deformed to facilitate assembling the retainer 21a on the inside diameter side of the shell type outer ring 41a. Thus, the productivity can be improved.

The split retaining portions 29a and 29b each have a first engagement portion 30a protruding in the circumferential direction and a second engagement portion 30b indented in the circumferential direction, at their respective ends in the circumferential direction. The first engagement portions 30a and the second engagement portions 30b provided at the circumferential ends of the respective split retaining portions 29a and 29b are engaged with each other, thereby enabling the annular retainer 21a to be assembled on the inside diameter side of the shell type outer ring 41a without misalignment in the axial direction.

The washer 31a has an annular shape. Specifically, the washer 31a is in an annular shape following an outer ring inside diameter surface 43a, which will be described later, of the shell type outer ring 41a. The washer 31a is arranged concentrically with the aforementioned unshown shaft and the shell type outer ring 41a, in a space sandwiched between the shaft and the shell type outer ring 41a. The washer 31a includes a washer outside diameter surface 32a located on the outside diameter side, a washer inside diameter surface 33a located on the inside diameter side, a washer first end surface 34a located on the one side in the axial direction, and a washer second end surface 35a located on the other side in the axial direction. The washer 31a is arranged adjacent to the retainer 21a in the axial direction. Specifically, the washer is arranged between the retainer second end surface 25a and protrusions 51a to 55a, which will be described later, in the axial direction. In this case, the washer is arranged such that, in the axial direction, the retainer second end surface 25a faces the washer first end surface 34a and the protrusions 51a to 55a face the washer second end surface 35a. The washer 31a is made of a metal. The washer 31a has a cut portion 36a at which a portion of the annular shape is cut off. This cut portion 36a can be utilized to elastically deform the washer 31a, thereby enabling the washer 31a to be assembled on the inside diameter side of the shell type outer ring 41a.

The configuration of the shell type outer ring 41a will now be described. The shell type outer ring 41a includes an outer ring outside diameter surface 42a located on the outside diameter side, an outer ring inside diameter surface 43a located on the inside diameter side, an outer ring first end surface 44a located on the one side in the axial direction, and an outer ring second end surface 45a located on the other side in the axial direction. The outer ring inside diameter surface 43a includes the raceway surface 13a. That is, the shell type outer ring 41a includes the raceway surface 13a on the outer ring inside diameter surface 43a on the inside diameter side. The raceway surface 13a is arranged at the central region in the axial direction of the outer ring inside diameter surface 43a. The outside diameter of the shell type outer ring 41a is indicated by a length D₂ in FIG. 3. As the length D₂, a length that has a relationship of 7×length D₁ ≤ length D₂ ≤ 60×length D₁ or more is suitably used. In the case where 0.5 mm is selected as the value of the length D₁, a value having the relationship of 3.5 mm ≤ length D₂ ≤ 30.0 mm is suitably used as the length D₂. In the present embodiment, the length D₂ is 15 mm.

The wall thickness of the shell type outer ring 41a is indicated by a length T₁ in the radial direction between the outer ring outside diameter surface 42a and the outer ring inside diameter surface 43a. In recent years, a reduced cross section of the rolling bearing 10a has been demanded from the standpoint of reduced friction. In this case, the wall thickness of the shell type outer ring 41a is preferably as thin as possible. However, the shell type outer ring 41a is subjected to, for example, carbonitriding treatment or carburizing treatment after the formation of the outer shape of the shell type outer ring 41a, for applying strength thereto. Here, in order to maintain the strength as the shell type outer ring 41a, it is necessary to form a carbonitrided layer or carburized layer having a certain thickness. This means that the wall thickness of a certain level or more is required for the shell type outer ring 41a. Specifically, the length T₁, which is the wall thickness of the shell type outer ring 41a, is 0.3 mm or more. With this, the carbonitrided layer or other layer necessary for maintaining the strength can be secured. The length T₁ is suitably 2.0 mm or less. This makes it possible to achieve a reduced cross section while maintaining the strength. In the present embodiment, 0.5 mm is selected as the length T₁.

Here, when the diameter of the rollers 11a is a length D₁ and the wall thickness of the shell type outer ring 41a is T₁, the roller diameter and the wall thickness of the shell type outer ring 41a have a relationship of 0.5 ≤ length D₁/length T₁ < 1.5. According to such a configuration, a reduced cross section can be achieved by ensuring a proper relationship between the diameter of the rollers 11a and the wall thickness of the shell type outer ring 41a, including the above-described condition that the diameter of the rollers 11a is not more than 2 mm. In the present embodiment, the length D₁ is 0.5 mm, and the length T₁ is also 0.5 mm. Thus, the value of length D₁/length T₁ is 1, satisfying the above-described relationship.

The shell type outer ring 41a includes a movement restricting portion that restricts the movement of the retainer 21a in the axial direction. The axial movement of the retainer 21a can thus be restricted. In the present embodiment, the movement restricting portion includes a flange 46a and protrusions 51a to 55a, which will be described below.

The shell type outer ring 41a has, in a first region 19a including a first end 17a located on one side in the axial direction thereof, a flange 46a formed to extend on the inside diameter side. In the present embodiment, the first end 17a corresponds to the outer ring first end surface 44a. The flange 46a is provided to protrude on the inside diameter side. The flange 46a has an annular shape. The flange 46a can be formed by a portion that is left when a bottom portion of a cup-shaped member formed by drawing is cut off. When the length of the flange 46a in the radial direction from the raceway surface 13a is a length L₂, the length L₂ is not more than the length T₁, which is the wall thickness of the shell type outer ring 41a. Specifically, the length L₂ in the axial direction from the raceway surface 13a to a flange end surface 47a of the flange 46a, which is the protruding amount in the radial direction of the flange 46a, is not more than the length T₁, the wall thickness of the shell type outer ring 41a. In other words, the relationship of length L₂ ≤ length T₁ holds. In this case, the flange 46a is formed, not by bending the first end 17a located on the one side of the shell type outer ring, but by cutting off the bottom portion of the cup-shaped member, so the length L₂ can be easily made to be not more than the length T₁, the wall thickness.

Here, in a second region 20a of the shell type outer ring 41a including a second end 18a located on the other side in the axial direction thereof, protrusions 51a, 52a, 53a, 54a, and 55a are formed. In the present embodiment, the second end 18a corresponds to the outer ring second end surface 45a. Aplurality of protrusions 51a, 52a, 53a, 54a, and 55a are provided spaced apart from each other in the circumferential direction. Specifically, in the present embodiment, five protrusions 51a to 55a in total are provided at equal intervals in the circumferential direction. The protrusions 51a to 55a each have a rectangular outer shape, specifically an oblong shape, as viewed in the radial direction. One ends in the axial direction of the protrusions 51a to 55a constitute part of the outer ring second end surface 45a. When the protruding amount of the protrusions 51a to 55a from the raceway surface 13a is a length L₁, the length L₁ is not more than the length T₁. Specifically, the length L₁ in the radial direction from the raceway surface 13a to a protrusion end surface 48a of the protrusion 51a, which is the protruding amount in the radial direction of the protrusions 51a to 55a, is not more than the length T₁, which is the wall thickness of the shell type outer ring 41a. In other words, the relationship of length L₁ ≤ length T₁ holds.

Further, on the outer ring outside diameter surface 42a of the shell type outer ring 41a, indentations 56a, 57a, 58a, 59a, and 60a are formed in regions corresponding to the respective protrusions 51a, 52a, 53a, 54a, and 55a in the radial direction. As viewed from the outside in the radial direction, the indentations 56a to 60a each have a shape intended in a rectangular shape, specifically in an oblong shape. It should be noted that the indented amount of the indentations 56a to 60a, indicated by a length L₃ in FIG. 4, is equivalent to the protruding amount of the protrusions 51a to 55a, i.e., the length L₁ described above.

An example of the method of producing the shell type outer ring 41a and the rolling bearing 10a including the shell type outer ring 41a will now be described in brief. The shell type outer ring 41a is formed by drawing. Specifically, a flat steel plate is prepared. This steel plate has a wall thickness equivalent to the length T₁, which is the wall thickness of the shell type outer ring 41a. The plate is drawn into a cup shape to form a cylindrical surface. The cup-shaped member is separated from the flat plate portion, and the bottom portion of the cup-shaped member is punched and hollowed out. In this manner, a flange 46a is formed in a first region 19a including a first end (closed end) located on one side in the axial direction of the shell type outer ring 41a. At this time, it is readily possible to form the flange 46a having the protruding amount of not more than the wall thickness of the shell type outer ring 41a when punching out the bottom portion so as to leave the flange 46a.

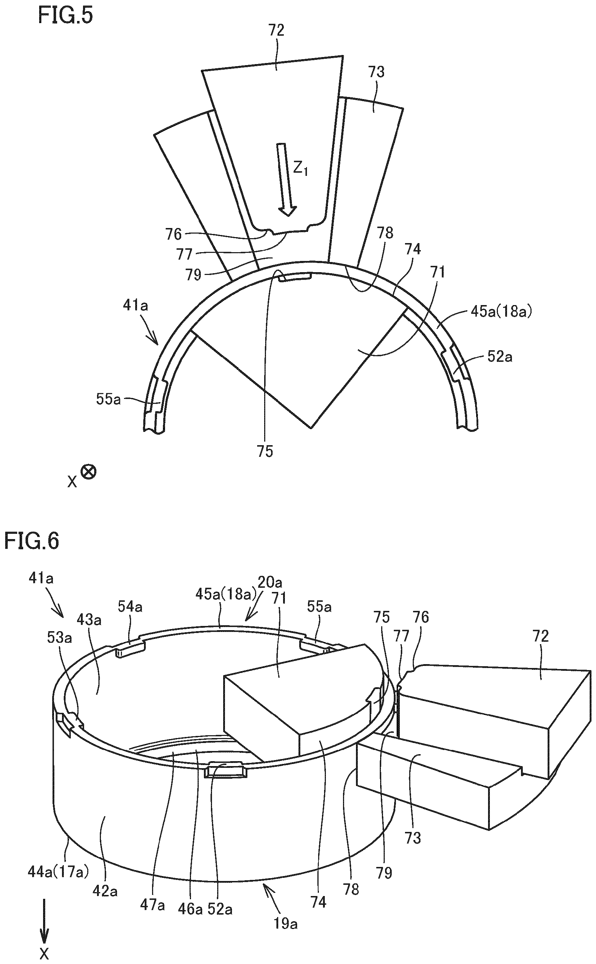

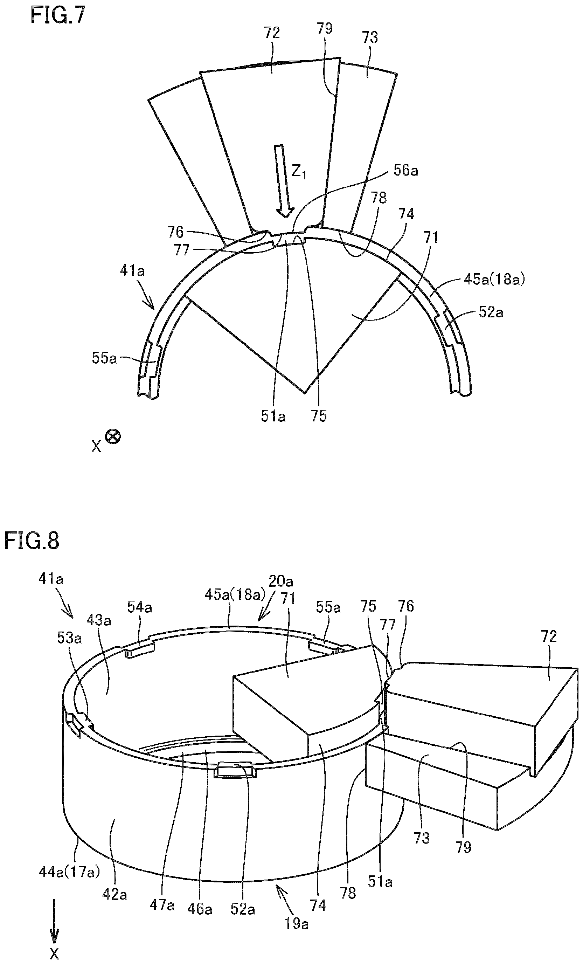

Next, protrusions 51a to 55a are formed in a second region 20a including a second end 18a (open end) located on the other side in the axial direction of the shell type outer ring 41a. FIGS. 5 and 7 are schematic side views of a portion of the shell type outer ring 41a when the protrusions 51a to 55a are formed. FIGS. 6 and 8 are schematic perspective views of a portion of the shell type outer ring 41a when the protrusions 51a to 55a are formed. FIGS. 5 and 6 illustrate the state before the formation of the protrusion 51a, and FIGS. 7 and 8 illustrate the state after the formation of the protrusion 51a.

Referring first to FIGS. 5 and 6 as well, when forming the protrusions 51a to 55a, a first concave die 71, a first convex die 72, and a pedestal jig 73 are prepared. Here, the configurations of the first concave die 71, the first convex die 72, and the pedestal jig 73 will be briefly described. The first concave die 71 is in the form of a block and has a fan shape as viewed in the axial direction (X direction). The first concave die 71 has a length in the axial direction shorter than the length in the axial direction of the shell type outer ring 41a. The first concave die 71 has an arc surface 74 following the outer ring inside diameter surface 43a of the shell type outer ring 41a. On the arc surface 74, a groove 75 is formed which corresponds to the shape of the protrusions 51a to 55a. The groove 75 is provided to extend in the axial direction. The indented amount of the groove 75 on the arc surface 74 is not more than the length T₁, which is the wall thickness of the shell type outer ring 41a, and is equivalent to that of the indentations 56a to 60a.

The first convex die 72 is also in the form of a block, and has an isosceles trapezoidal shape as viewed in the axial direction (X direction). The first convex die 72 has a length in the axial direction shorter than the length in the axial direction of the shell type outer ring 41a. As viewed in the axial direction, on a surface 76 of the first convex die 72 corresponding to the shorter one of the pair of bases constituting the isosceles trapezoid, a projecting portion 77 corresponding to the shape of the indentations 56a to 60a is formed. The projecting portion 77 is provided to be raised from the surface 76. The raised height of the projecting portion 77 is equivalent to the protruding amount of the protrusions 51a to 55a.

The pedestal jig 73 is in the form of a block and includes an arc surface 78 following the outer ring outside diameter surface 42a of the shell type outer ring 41a. The pedestal jig 73 has a receiving recess 79 formed to receive the first convex die 72 therein.

The protrusions 51a to 55a are formed using the first concave die 71, the first convex die 72, and the pedestal jig 73 as described above. First, the first concave die 71 is arranged on the inside diameter side of the shell type outer ring 41a. At this time, the first concave die is arranged such that the outer ring inside diameter surface 43a of the shell type outer ring 41a and the arc surface 74 of the first concave die 71 contact each other in the second region 20a including the outer ring second end surface 45a, which is the second end 18a located on the other side in the axial direction of the shell type outer ring 41a. The first concave die is also arranged such that in the circumferential direction, the groove 75 is located at a position where a protrusion, 51a to 55a, is to be formed. Next, the pedestal jig 73 is disposed on the outside diameter side of the shell type outer ring 41a. At this time, the pedestal jig is arranged such that the outer ring outside diameter surface 42a of the shell type outer ring 41a and the arc surface 78 of the pedestal jig 73 contact each other. Thereafter, the first convex die 72 is placed in the receiving recess 79. At this time, the first convex die is arranged such that the surface 76 faces the outer ring outside diameter surface 42a of the shell type outer ring 41a and the projecting portion 77 is directed toward the inside diameter side.

Subsequently, the first convex die 72 is pushed forward to the inside diameter side, which is the direction indicated by the arrow Z₁. This allows the projecting portion 77 to contact the outer ring outside diameter surface 42a of the shell type outer ring 41a. As the first convex die 72 is continuously pushed forward to the inside diameter side, the state shown in FIGS. 7 and 8 is achieved.

Referring to FIGS. 7 and 8 as well, as the first convex die 72 is pushed forward, the projecting portion 77 causes the outer ring outside diameter surface 42a of the shell type outer ring 41a to be indented, so that a protrusion 51a and an indentation 56a are formed. In this case, with the groove 75 of the first concave die 71, the protrusion 51a is shaped to follow the groove 75. The first concave die 71, the first convex die 72, and the pedestal jig 73 are used in the above-described manner, while being shifted in the circumferential direction, whereby five protrusions 51a to 55a and five indentations 56a to 60a are formed.

Thereafter, the shell type outer ring 41a is subjected to heat treatment such as carbonitriding treatment or carburizing treatment to complete the shell type outer ring 41a. Then, on the inside diameter side of the shell type outer ring 41a, the split retaining portions 29a and 29b, retaining the rollers 11a in the respective pockets 26a, are incorporated, and the first engagement portions 30a and the second engagement portions 30b are engaged to assemble the retainer 21a in the annular shape on the inside diameter side of the shell type outer ring 41a. The rolling bearing 10a is thus produced.

According to the rolling bearing 10a with such a configuration, the flange 46a extending on the inside diameter side is formed in the first region 19a of the shell type outer ring 41a including the first end 17a located on the one side in the axial direction thereof. When the length in the radial direction of the flange 46a from the raceway surface 13a is the length L₂ and the wall thickness of the shell type outer ring 41a at the raceway surface 13a is the length T₁, the length L₂ is not more than the length T₁. For the shell type outer ring 41a, the bottom portion is punched and cut off after the drawing process to form the flange 46a. The bottom portion to be cut off can be made as large as possible, to make the flange short just enough to restrict the movement of the retainer 21a. In other words, the protruding amount of the flange 46a to the inside diameter side can be easily adjusted, and the length L₂ can be easily made to be not more than the length T₁.

Further, the protrusions 51a to 55a protruding on the inside diameter side are formed in the second region 20a of the shell type outer ring 41a including the second end 18a located on the other side in the axial direction thereof. A plurality of protrusions 51a to 55a are provided spaced apart from each other in the circumferential direction. When the protruding amount of the protrusions 51a to 55a from the raceway surface 13a is the length L₁, the length L₁ is not more than the length T₁. Such protrusions 51a to 55a can be easily formed by pressing the shell type outer ring 41a with a die from the outside diameter side before the heat treatment, or by scraping and raising the outer ring inside diameter surface 43a of the shell type outer ring 41a. As the protrusions 51a to 55a are formed in the above-described manner, instead of being formed by bending or the like, they can be made short just enough to restrict the movement of the retainer 21a. In other words, the protruding amount of the protrusions 51a to 55a to the inside diameter side can be easily adjusted, and the length L₁ can be easily made to be not more than the length T₁. According to such protrusions 51a to 55a, it is possible to prevent misalignment and falling off of the retainer 21a in the axial direction, while achieving a reduced cross section.

From the above, the rolling bearing 10a described above ensures good productivity and achieves reduced friction.

In the present embodiment, the indentations 56a to 60a are formed on the outer ring outside diameter surface 42a of the shell type outer ring 41a in the regions corresponding to the protrusions 51a to 55a in the radial direction. Thus, the indentations 56a to 60a can be utilized, for example, when a seal member used for sealing the rolling bearing 10a is to be attached to the rolling bearing 10a. Specifically, for example in the case of attaching the seal member on the second end 18a side in the axial direction of the shell type outer ring 41a, these indentations 56a to 60a can be engaged with protruding portions provided on the inside diameter side of the annular seal member in portions corresponding to the indentations 56a to 60a, to thereby achieve stable retention of the seal member in the rolling bearing 10a. It should be noted that such indentations 56a to 60a can be easily formed when the protrusions 51a to 55a are formed by pressing the shell type outer ring 41a from the outside diameter side thereof.

In the present embodiment, the rolling bearing 10a includes the washer 31a, which has an annular shape following the outer ring inside diameter surface 43a of the shell type outer ring 41a and is arranged between the retainer 21a and the protrusions 51a to 55a in the axial direction. Thus, the washer 31a is able to avoid direct contact between the protrusions 51a to 55a and the end surface in the axial direction of the retainer 21a, which is in this case the retainer second end surface 25a. Accordingly, the retainer 21a can be used stably for a long period of time, resulting in an extended life of the rolling bearing 10a.

In the present embodiment, the protrusions 51a to 55a have a rectangular outer shape as viewed in the radial direction. Thus, even if the rolling bearing 10a does not include the washer 31a and the protrusions 51a to 55a come into contact with the retainer 21a in the axial direction, the risk of the end surface of the retainer 21a, specifically the retainer second end surface 25a in this case, being scraped or dented by the protrusions 51a to 55a can be reduced. This ensures stable use for a longer period of time.

### (Embodiment 2)

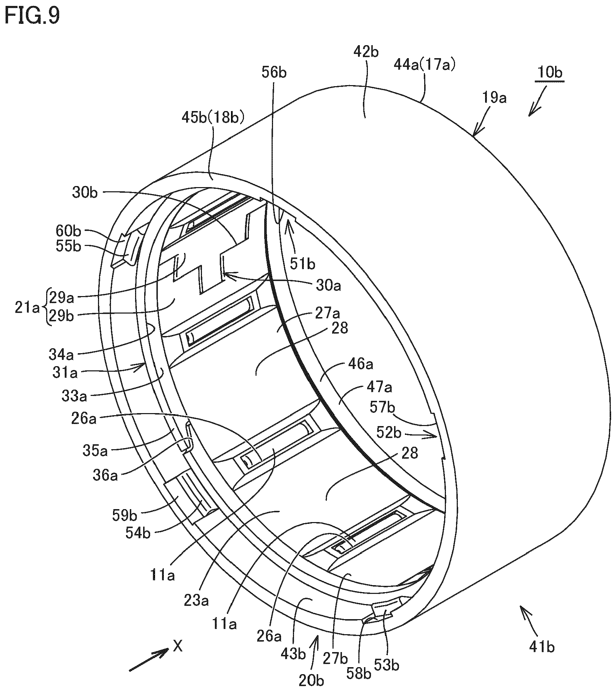

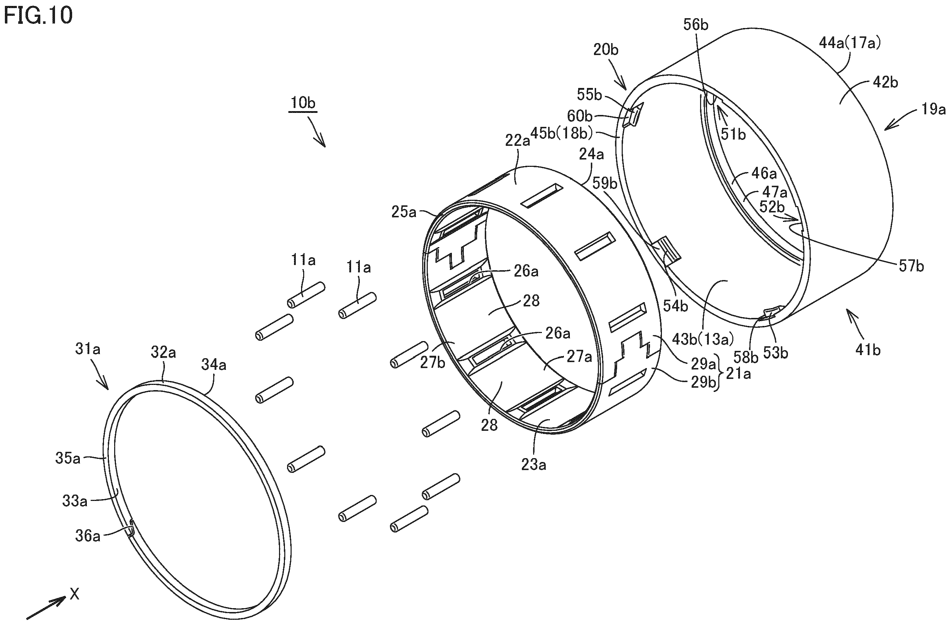

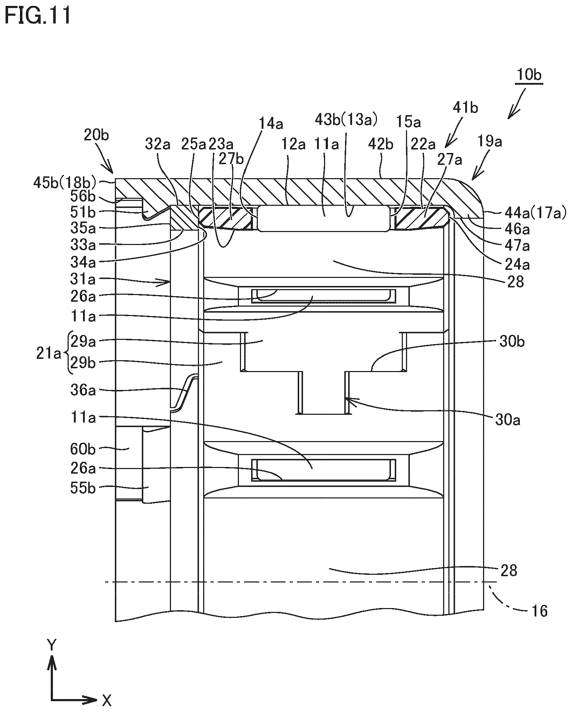

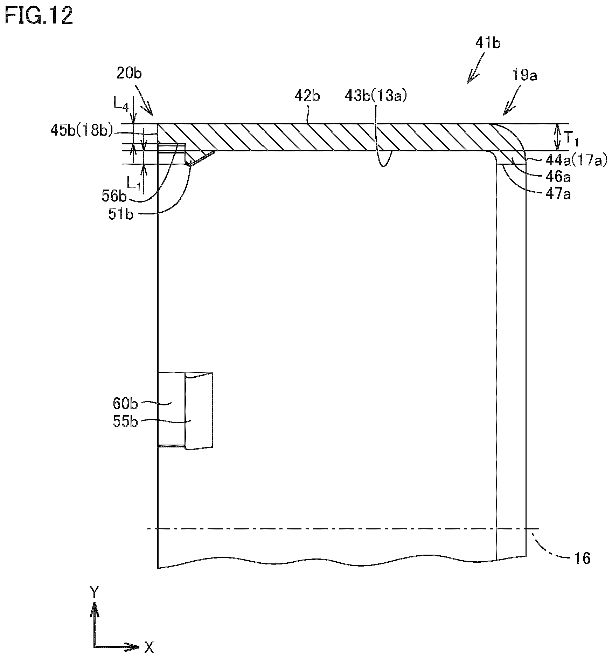

Another embodiment, Embodiment 2, will now be described. FIG. 9 is a schematic perspective view showing the structure of a rolling bearing in Embodiment 2. FIG. 10 is an exploded perspective view of the rolling bearing shown in FIG. 9. FIG. 11 is a schematic cross-sectional view of a portion of the rolling bearing shown in FIG. 9. FIG. 12 is a schematic cross-sectional view of a portion of a shell type outer ring included in the rolling bearing shown in FIG. 9. The rolling bearing of Embodiment 2 differs from the case of Embodiment 1 in terms of the shape of the shell type outer ring.

Referring to FIGS. 9 to 12, the rolling bearing 10b of Embodiment 2 includes a plurality of rollers 11a as the rolling elements, a retainer 21a retaining the rollers 11a, a washer 31a, and a shell type outer ring 41b including a raceway surface 13a on its inside diameter side. The rollers 11a, the retainer 21a, and the washer 31a each have the same configuration as in the case of the rolling bearing 10a of Embodiment 1, so the description thereof will not be repeated.

The shell type outer ring 41b includes a movement restricting portion that restricts the movement in the axial direction of the retainer 21a. The axial movement of the retainer 21a can thus be restricted. In the present embodiment, the movement restricting portion includes the flange 46a and protrusions 51b to 55b, which will be described below.

The shell type outer ring 41b includes an outer ring outside diameter surface 42b located on the outside diameter side, an outer ring inside diameter surface 43b located on the inside diameter side, an outer ring first end surface 44a located on the one side in the axial direction, and an outer ring second end surface 45b located on the other side in the axial direction. Further, the shell type outer ring 41b has, in a first region 19a including a first end 17a located on the one side in the axial direction of the shell type outer ring 41b, a flange 46a formed to extent on the inside diameter side. The configuration of the flange 46a is also the same as that of the flange 46a included in the shell type outer ring 41a of the rolling bearing 10a of Embodiment 1, so the description thereof will not be repeated.

Here, in a second region 20b of the shell type outer ring 41b including the outer ring second end surface 45b, which is the second end 18b located on the other side in the axial direction, protrusions 51b, 52b, 53b, 54b, and 55b are formed to protrude on the inside diameter side. The protrusions 51b to 55b are each provided to be raised from the outer ring inside diameter surface 43b. A plurality of protrusions 51b to 55b are provided spaced apart from each other in the circumferential direction. Specifically, in the present embodiment, five protrusions 51b to 55b in total are provided at equal intervals in the circumferential direction. In the cross sections shown in FIGS. 11 and 12, each of the protrusions 5 1b to 55b has an outer shape pointed on the outer ring second end surface 45b side. Provided between the protrusions 51b to 55b and the outer ring second end surface 45b in the axial direction are thin-walled portions 56b, 57b, 58b, 59b, and 60b, which are formed when the protrusions 51b to 55b are formed. As viewed from the inside diameter side, the thin-walled portions 56b to 60b each have a shape intended in a rectangular shape, specifically in an oblong shape. It should be noted that, unlike the case of Embodiment 1, the outer ring outside diameter surface 42b of the shell type outer ring 41b is provided with no recesses. The protruding amount of the protrusions 51b to 55b from the raceway surface 13a is indicated by a length L₁ in FIG. 12. The length L₁ is not more than the length T₁. The thickness of the thin-walled portions 56b to 60b, i.e., the radial length of the thin-walled portions 56b to 60b, is indicated by a length L₄. The length L₄ is less than the length T₁.

An example of the method of producing the shell type outer ring 41b will now be described. The shell type outer ring 41b is produced in the same manner as in Embodiment 1 until the cup-shaped member is formed by drawing and the bottom portion is punched out to leave the flange.

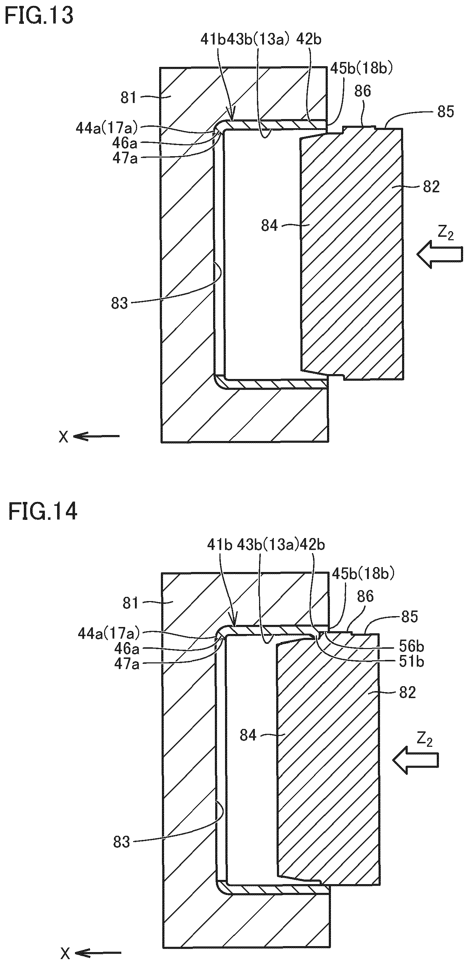

Subsequently, protrusions 51b to 55b are formed in the second region 20b including the second end 18b (open end) located on the other side in the axial direction, which is in this case the outer ring second end surface 45b corresponding to the second end 18b. FIGS. 13 and 14 are schematic side views showing a portion of the shell type outer ring 41b when the protrusions 51b to 55b are formed. FIG. 13 illustrates the state before the formation of the protrusions 51b to 55b, and FIG. 14 illustrates the state after the formation of the protrusions 51b to 55b.

Referring first to FIG. 13 as well, when forming the protrusions 51b to 55b, a second concave die 81 and a second convex die 82 are prepared. The configurations of the second concave die 81 and the second convex die 82 will now be described in brief. The second concave die 81 is in the form of a block. The second concave die 81 has a fitting recess 83 formed therein. Specifically, the shell type outer ring 41b can be fitted into the fitting recess 83. In other words, the fitting recess 83 is annularly recessed as viewed in the axial direction, and has its inside diameter corresponding to the outside diameter of the shell type outer ring 41b.

The second convex die 82 is of a solid cylindrical shape. The second convex die 82 has its distal end 84 tapered toward the tip end. With this configuration, when the second convex die 82 is pushed forward in the direction of the arrow Z₂ as will be described later, the distal end 84 can be prevented from interfering with the outer ring inside diameter surface 43b of the shell type outer ring 41b, thereby allowing the protrusions 51b to 55b to be formed appropriately.

The second convex die 82 has an outer circumferential surface 85 in the radial direction on which ribs 86 are formed at intervals in the circumferential direction as viewed in the axial direction (X direction). Five ribs 86 are provided at intervals in the circumferential direction. Specifically, the ribs 86 are provided at intervals in the circumferential direction so as to correspond to the intervals in the circumferential direction at which the protrusions 51b to 55b are provided. The raised height of the ribs 86 is lower than the wall thickness of the shell type outer ring 41b.

The protrusions 51b to 55b are formed using the second concave die 81 and the second convex die 82 as described above. First, the shell type outer ring 41b is fitted into the fitting recess 83. In this case, the shell type outer ring 41b is arranged such that the outer ring outside diameter surface 42b of the shell type outer ring 41b is fitted on the inner wall surface of the fitting recess 83.

Next, the second convex die 82 described above is prepared and pushed forward from the distal end 84 side in the direction indicated by the arrow Z₂ into the shell type outer ring 41b. This causes portions of the outer ring inside diameter surface 43b of the shell type outer ring 41b to be scraped from the outer ring second end surface 45b side. As the second convex die 82 is continuously pushed forward, the scraped portions of the outer ring inside diameter surface 43a of the shell type outer ring 41b are raised, as shown in FIG. 14, and the protrusions 51b to 55b are formed rising from the outer ring inside diameter surface 43b. In conjunction with the formation of the protrusions 51b to 55b, the thin-walled portions 56b to 60b are formed. In this case, since five ribs 86 are provided at intervals in the circumferential direction, pushing the second convex die 82 forward only once in the direction of the arrow Z₂ simultaneously forms the five protrusions 51b to 55b. The five thin-walled portions 56b to 60b are also formed simultaneously.

Thereafter, heat treatment such as carbonitriding treatment or carburizing treatment is performed to complete the shell type outer ring 41b, as in the case of the shell type outer ring 41a. Then, on the inside diameter side of the shell type outer ring 41b, the split retaining portions 29a and 29b, retaining the rollers 11a in the respective pockets 26a, are incorporated, and the first engagement portions 30a and the second engagement portions 30b are engaged to assemble the retainer 21a in the annular shape on the inside diameter side of the shell type outer ring 41b. The rolling bearing 10b is thus produced.

Such a rolling bearing 10b also ensures good productivity and achieves reduced friction.

Furthermore, in the rolling bearing 10b including the shell type outer ring 41b having such a configuration, when producing the shell type outer ring 41b, the protrusions 51b to 55b can all be formed by pushing the second convex die 82 forward just one time. This can improve the productivity. Further, in this case, unlike the case of Embodiment 1, the outer ring outside diameter surface 42b of the shell type outer ring 41b can form a cylindrical surface with no indentations on the outer ring outside diameter surface 42b.

In the present embodiment, the shell type outer ring 41b includes the thin-walled portions 56b to 60b arranged between the protrusions 51b to 55b and the second end 18b in the axial direction, the thin-walled portions being formed so as to reduce the thickness of the shell type outer ring 41b. Thus, the thin-wall portions 56b to 60b can be utilized, for example, when a seal member used for sealing the rolling bearing 10b is to be attached to the rolling bearing. Specifically, for example in the case of attaching the seal member on the second end 18b side in the axial direction of the shell type outer ring 41b, these thin-walled portions 56b to 60b can be engaged with protruding portions provided on the outside diameter side of the annular seal member in portions corresponding to the thin-walled portions 56b to 60b, to thereby achieve stable retention of the seal member in the rolling bearing 10b. It should be noted that such thin-walled portions 56b to 60b can be easily formed when forming the protrusions 51b to 55b by scraping the inside diameter side of the shell type outer ring 41b.

### (Other Embodiments)

While the rolling bearing includes a washer in the above embodiments, the present invention is not limited thereto. The rolling bearing may not include a washer.

Further, while the retainer includes two split retaining portions in the above embodiments, the present invention is not limited thereto; the retainer may include three or more split retaining portions. The retainer may not be split, but may be a single annular retainer. In this case, the retainer may be configured, for example, to be elastically deformable to the inside diameter side, and at the time of arranging the retainer on the inside diameter side of the shell type outer ring 41a, this elastic deformability of the retainer may be utilized to arrange the retainer on the inside diameter side of the shell type outer ring 41a.

While five protrusions in total have been provided in the above embodiments, not limited thereto, two protrusions, three protrusions, or four protrusions may be provided. Even six or more protrusions may be provided. The protrusions do not need to be provided at equal intervals in the circumferential direction.

While the needle rollers have been used as the rollers rolling on the raceway surface in the above embodiments, not limited thereto, cylindrical rollers or long cylindrical rollers may be used.

While the above embodiments have been described on the assumption that an unknown shaft is arranged on the inside diameter side, the present invention is not limited thereto. A bearing ring (inner ring), for example, may be adopted as the inner member.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

### Reference Signs List

10a, 10b: rolling bearing; 11a: roller; 12a: rolling surface; 13a: raceway surface; 14a: roller first end surface; 15a: roller second end surface; 16: rotational center axis; 17a: first end; 18a, 18b: second end; 19a: first region; 20a, 20b: second region; 21a: retainer; 22a: retainer outside diameter surface; 23a: retainer inside diameter surface; 24a: retainer first end surface; 25a: retainer second end surface; 26a: pocket; 27a, 27b: annular portion; 28: pillar portion; 29a, 29b: split retaining portion; 30a: first engagement portion; 30b: second engagement portion; 31a: washer; 32a: washer outside diameter surface; 33a: washer inside diameter surface; 34a: washer first end surface; 35a: washer second end surface; 36a: cut portion; 41a, 41b: shell type outer ring; 42a, 42b: outer ring outside diameter surface; 43a, 43b: outer ring inside diameter surface; 44a: outer ring first end surface; 45a, 45b: outer ring second end surface; 46a: flange; 47a: flange end surface; 48a: protrusion end surface; 51a, 51b, 52a, 52b, 53a, 53b, 54a, 54b, 55a, 55b: protrusion; 56a, 57a, 58a, 59a, 60a: indentation; 56b, 57b, 58b, 59b, 60b: thin-walled portion; 71: first concave die; 72: first convex die; 73: pedestal jig; 74, 78: arc surface; 75: groove; 76: surface; 77: projecting portion; 79: receiving recess; 81: second concave die; 82: second convex die; 83: fitting recess; 84: distal end; 85: outer circumferential surface; and 86: rib.

## Claims

1. A rolling bearing comprising:
a shell type outer ring having a raceway surface on an inside diameter side thereof;
a plurality of rollers rolling on the raceway surface; and
a retainer arranged on the inside diameter side of the shell type outer ring and retaining the plurality of rollers;
the shell type outer ring having, in a first region including a first end located on one side in an axial direction thereof, a flange formed to extend on the inside diameter side,
the shell type outer ring having, in a second region including a second end located on another side in the axial direction thereof, a protrusion formed to protrude on the inside diameter side,
a plurality of the protrusions being provided spaced apart from each other in a circumferential direction,
wherein when a protruding amount of the protrusion from the raceway surface is a length L₁ and a wall thickness of the shell type outer ring at the raceway surface is a length T₁,
the length L₁ is not more than the length T₁.

2. The rolling bearing according to claim 1, wherein when a length in a radial direction of the flange from the raceway surface is a length L₂,
the length L₂ is not more than the length T₁.

3. The rolling bearing according to claim 1 or 2, wherein the shell type outer ring has an indentation formed on an outer ring outside diameter surface thereof in a region corresponding to the protrusion in a radial direction.

4. The rolling bearing according to any one of claims 1 to 3, wherein the shell type outer ring includes a thin-walled portion arranged between the protrusion and the second end in the axial direction, the thin-walled portion being formed so as to reduce a thickness of the shell type outer ring.

5. The rolling bearing according to any one of claims 1 to 4, wherein the protrusion has a rectangular outer shape as viewed in a radial direction.

6. The rolling bearing according to any one of claims 1 to 5, further comprising a washer having an annular shape following an outer ring inside diameter surface of the shell type outer ring, the washer being arranged between the retainer and the protrusions in the axial direction.

7. The rolling bearing according to any one of claims 1 to 6, wherein the retainer is a split retainer made of a resin and divided in a circumferential direction.

8. The rolling bearing according to any one of claims 1 to 7, wherein the rollers are needle rollers.
